# EUROPEAN PATENT APPLICATION

(11) **EP 2 086 243 A1**
(43) Date of publication of application: **05.08.2009**
(21) Application number: 08715372.2
(22) Date of filing: 31.03.2008
(51) Int. Cl.: H04Q 1/00

(54) **METHOD FOR COLLECTING POINTS NUMBER OF INFORMATIONAL AD, SYSTEM AND DEVICE**

(30) Priority: 13.06.2007 CN 200710074957; 09.10.2007 CN 200710181106
(71) Applicant: Huawei Technologies Co., Ltd., Longgang District, Shenzhen Guangdong 518129 (CN)
(72) Inventor: HU, Hanqiang, Shenzhen Guangdong 518129 (CN); ZHAO, Yang, Shenzhen Guangdong 518129 (CN); GU, Chong, Shenzhen Guangdong 518129 (CN)
(74) Representative: Thun, Clemens
(86) International application number: PCT/CN2008/070639
(87) International publication number: WO 2008/151525

(57) **Abstract**

A method for collecting message advertisement metrics data is provided, which includes the following steps: receiving a message attached with an advertisement sent by a message server; identifying the advertisement in the message and recording an advertisement metrics event of the advertisement in real time; and feeding back the advertisement metrics data to an advertisement server in real time. A system and a device for collecting message advertisement metrics data are further provided.

## Description

### FIELD OF THE TECHNOLOGY

The present invention relates to the field of communication technology, and more particularly to a method, system and device for collecting message advertisement metrics data.

### BACKGROUND

Along with the development of the 3G technology and network technology, the development of data services becomes more and more important, and the mobile advertisement service has become a popular advertising mode. The so called mobile advertisement service is payment information propagated through mobile medium. As regard to the developing form of mobile advertisement service, the mobile advertisement services have many service manners, such as handset built-in advertisement, MMS advertisement, handset video advertisement, handset game advertisement. As regard to the form of content, the advertisements can be classified into text advertisements, picture advertisements, video advertisements, audio advertisements, or combinations thereof.

The message advertisement is a popular advertising mode, including inserting advertisement in the messages such as MMS (Multimedia Message Series), IM (Instant Message), CPM (Converge IP message), E-mail, WAP PUSH (Wireless Application Protocol PUSH) by the advertisement (AD) server, or forwarding the message attached with an advertisement by MMS, IM, CPM, E-mail, etc. among users. After this message attached with the advertisement is sent to the handset terminal of the user, because the user may directly delete the message without watching after receiving it, the AD server cannot record the advertisement metrics data immediately, but can record the "impression" or "click" advertisement metrics data only when the user opens the message and browses the advertisement or further clicks the link in the AD.

Currently, the method for collecting a message advertisement metrics data in the environment includes: sending the advertisement message to the handset terminal, the user handset terminal recording the metrics data, and storing the accumulated metrics data on the terminal of the user, the AD server polling the handset terminal periodically to collect the advertisement metrics data stored on the terminal from the handset terminal, and collecting at a network side.

In the process of realizing the present invention, the inventor discovers that the existing method for collecting a message advertisement metrics data at least has the following disadvantages. The advertisement metrics data cannot be reported to the AD server in real-time, thus resulting in poor real-time property. When the polling collection time comes, if the handset terminal is shut down, the metrics data cannot be collected. As regard to some place to record the advertisement metrics data, when the user leaves the place, the metrics data of the user will not be collected. The user can forge, delete or modify the metrics data stored in the terminal cache at the terminal making the metrics data collection inaccurate. The AD server has to poll all the local handset terminals to perform polling metrics data collection, and thus the overhead of the system is large.

### SUMMARY

In view of this, it is necessary to provide a real-time, accurate message advertisement metrics data collection method to solve the problems in the prior art.

A system for collecting message advertisement metrics data is provided.

A terminal is provided.

An advertisement server is further provided.

A method for collecting message advertisement metrics data includes the following steps.
A message attached with an advertisement sent by a message server is received.
The advertisement in the message is identified, and an advertisement metrics event of the advertisement is recorded in real time.
The advertisement metrics data is fed back to the advertisement server in real time.

A method for collecting message advertisement metrics data includes the following steps.
A terminal receives the message attached with an advertisement, identifies the advertisement in the message, records the advertisement metrics event of the advertisement in real time, and feeds back the advertisement metrics data to the advertisement server in real time.
The advertisement server collects the real-time feedback advertisement metrics data at the network side in real time.

A method for collecting a message advertisement metrics data includes the following steps.
The real-time feedback advertisement metrics data sent by the terminal is received.
The advertisement metrics data is collected in real time, and the advertiser corresponding to the terminal and/or the terminal is charged according to the advertisement metrics data.

A method for collecting a message advertisement metrics data includes the following steps.
A message attached with a recommendation advertisement sent by the message server is received.
The advertisement in the message attached with the recommendation advertisement is identified, and the advertisement metrics event of the attached recommendation advertisement is recorded.
The recorded advertisement metrics data is fed back to the advertisement server, and the recommender identification information is carried.

A method for collecting message advertisement metrics data includes the following steps.
The advertisement metrics data of the recommendation advertisement fed back by the terminal is received.
The fed back advertisement metrics data of the recommendation advertisement is collected.

A system for collecting a message advertisement metrics data includes a terminal and an advertisement server.
The terminal is adapted to receive a message attached with an advertisement, identify the advertisement in the message, record the advertisement metrics event of the advertisement in real time, and feed back the advertisement metrics data in real time.
The advertisement server is adapted to collect the advertisement metrics data.

A system for collecting a message advertisement metrics data includes a message server, a terminal, and an advertisement server. The message server is adapted to send the message attached with a recommendation advertisement to the terminal. The terminal is adapted to receive the message attached with the recommendation advertisement, identify the recommendation advertisement in the message, record the advertisement metrics event of the recommendation advertisement, and feedback the advertisement metrics data of the recommendation advertisement to the advertisement server. The advertisement server is adapted to collect the advertisement metrics data of the recommendation advertisement fed back by the terminal.

A terminal includes a message receiving unit, an advertisement identifying unit, an event recording unit, and a metrics data feedback unit.
The message receiving unit is adapted to receive the message attached with an advertisement sent by the message server.
The advertisement identifying unit is adapted to identify the advertisement in the message.
The event recording unit is adapted to record the advertisement metrics event of the advertisement in real time.
The metrics data feedback unit is adapted to feed back the advertisement metrics data in real time.

A terminal includes a message client and an advertisement client.
The message client is adapted to receive the message attached with an advertisement sent by the message server, identify the advertisement in the message, and record the advertisement metrics event of the advertisement in real time.
The advertisement client is adapted to feed back the advertisement metrics data in real time according to the real-time recorded advertisement metrics event of the advertisement.

A terminal includes a message receiving unit, a recommendation advertisement identifying unit, a recommendation metrics event recording unit, and a recommendation advertisement metrics data feedback unit. The message receiving unit is adapted to receive the message attached with the recommendation advertisement. The recommendation advertisement identifying unit is adapted to identify the recommendation advertisement in the message. The recommendation metrics event recording unit is adapted to record the advertisement metrics event of the recommendation advertisement. The recommendation advertisement metrics data feedback unit is adapted to feed back the advertisement metrics data of the recommendation advertisement to the advertisement server.

A terminal includes a message client and an advertisement client. The message client is adapted to receive the message attached with a recommendation advertisement, identify the recommendation advertisement in the message, and record the advertisement metrics event of the recommendation advertisement. The advertisement client is adapted to feed back the advertisement metrics data of the recommendation advertisement to the advertisement server according to the recorded advertisement metrics data of the recommendation advertisement.

An advertisement server includes a metrics data collecting unit and a metrics data calculating unit. The metrics data collecting unit is adapted to collect the fed back advertisement metrics data in real time. The metrics data calculating unit is adapted to calculate the fed back advertisement metrics data.

An advertisement server includes a recommendation advertisement metrics data collecting unit and a recommendation statistic unit. The recommendation advertisement metrics data collecting unit is adapted to collect the advertisement metrics data of the recommendation advertisement fed back by the terminal. The recommendation statistic unit is adapted to measure the recommendation effect of the recommendation advertisement according to the advertisement metrics data of the fed back recommendation advertisement.

In the embodiments of the present invention, the advertisement identifying unit identifies the advertisement in the message by, the event recording unit records the advertisement metrics event in the advertisement in real time, and the metrics data feedback unit feeds back the advertisement metrics data in real time, so that the real-time reporting of the advertisement metrics data to the advertisement server is realized, and the advertisement metrics data measurement error due to time difference is thus reduced. Also, being unable to collect the advertisement metrics data due to terminal user shutting down is avoided, the advertisement metrics data can be collected in real time, thus avoiding being unable to measure the data in time due to user being away from the location where the advertisement is delivered. The metrics data feedback unit reports the advertisement metrics data to the advertisement server, so as to prevent from wasting the system resources as the advertisement server polling all the local terminals to collect the metrics data.

The detailed illustration is further made about the technique solutions of the present invention with reference to the accompanying drawings and embodiments.

### BRIEF DESCRIPTION OF THE DRAWINGS

FIG. 1 is a schematic overall structural view of a system for collecting message advertisement metrics data according to a first embodiment of the present invention;

FIG. 2 is a detailed schematic structural view of FIG. 1;

FIG. 3 is a schematic structural view of a system for collecting message advertisement metrics data according to a second embodiment of the present invention;

FIG. 4 is a flow chart of a method for collecting message advertisement metrics data according to a third embodiment of the present invention;

FIG. 5 is a flow chart of a method for collecting message advertisement metrics data according to a fourth embodiment of the present invention;

FIG. 6 is a schematic overall structural view of a system for collecting message recommendation advertisement metrics data according to a fifth embodiment of the present invention;

FIG. 7 is a detailed schematic structural view of FIG. 6;

FIG. 8 is a schematic structural view of a system for collecting message recommendation advertisement metrics data according to a sixth embodiment of the present invention;

FIG. 9 is a flow chart of a method for collecting message recommendation advertisement metrics data according to a seventh embodiment of the present invention;

FIG. 10 is a flow chart of a method for collecting message recommendation advertisement metrics data according to an eighth embodiment of the present invention; and

FIG. 11 is a schematic structural view of a method for collecting message recommendation advertisement metrics data according to a ninth embodiment of the present invention.

### DETAILED DESCRIPTION

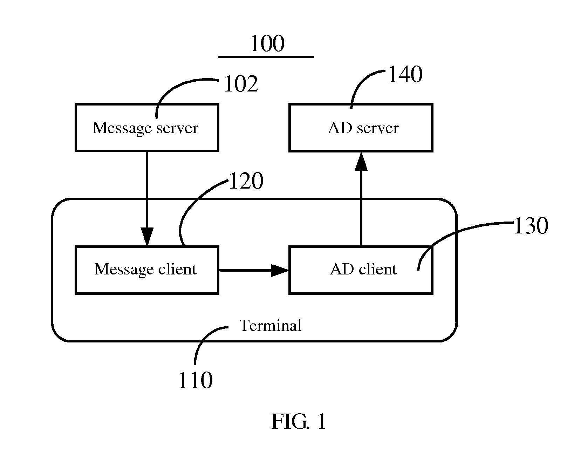

Referring to FIG. 1, a system for collecting message advertisement metrics data 100 according to a first embodiment of the present invention includes a message server 102, a terminal 110, and an advertisement (AD) server 140. The message server 102 is adapted to send the message attached with an advertisement, which can be MMS, IM, CPM, E-mail, WAP PUSH message, etc. The message includes the advertisement metadata of the advertisement, including AD identifier, AD number, domain name address of AD server and port number of AD server, or uniform resource locator (URL) of the advertisement server, etc. The terminal 110 is adapted to receive the message attached with an advertisement sent by the message server 102 to identify the advertisement in the message, record the advertisement metrics event of the advertisement in real time, and feed back the advertisement metrics data in real time. The advertisement server 140 is adapted to receive the advertisement metrics data, and also charge the collected advertisement metrics data after calculation.

The terminal 110 further includes a message client 120 and an AD client 130. The message client 120 is adapted to receive the message attached with an advertisement sent by the message server, identify the advertisement in the message, and record the advertisement metrics event of the advertisement in real time. The AD client 130 is adapted to feed back the advertisement metrics data in real time according to the real-time recorded advertisement metrics event of the advertisement.

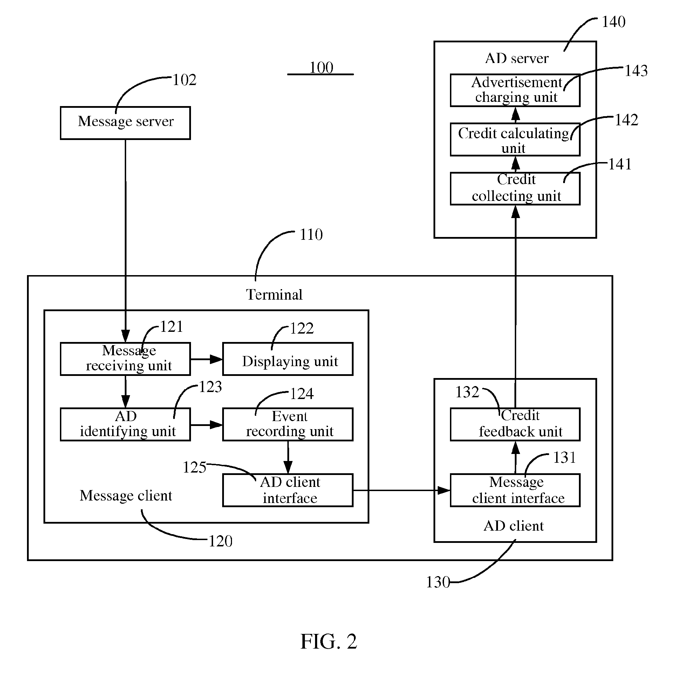

Referring to FIG. 2, the message client 120 further includes a message receiving unit 121, a displaying unit 122, an AD identifying unit 123, an event recording unit 124, and an AD client interface 125. The message receiving unit 121 is adapted to receive the message attached with an advertisement sent by the message server 102. The displaying unit 122 is adapted to display the message attached with the advertisement. If the message is an audio message, the display unit 122 also can be an audio play unit, such as a speaker. The AD identifying unit 123 is adapted to identify the advertisement in the message. The event recording unit 124 is adapted to record the advertisement metrics event of the advertisement in real time. The advertisement metrics event includes an impression event and/or a click event. The AD client interface 125 is adapted to send the recorded advertisement metrics data and the advertisement metadata to the AD client 130.

The AD client 130 includes a message client interface 131 and a metrics data feedback unit 132. The message client interface 131 interacts with the AD client interface 125, and receives the advertisement metrics data information and the advertisement meta-information, etc. sent by the AD client interface 125. The metrics data feedback unit 132 is adapted to feed back the advertisement metrics data to the AD server 140 in real time.

The AD server 140 includes a metrics data collecting unit 141, a metrics data calculating unit 142, and an advertisement charging unit 143. The metrics data collecting unit 141 is adapted to collect the advertisement metrics data fed back by the metrics data feedback unit 132 in real time. The metrics data calculating unit 142 is adapted to collect the fed back advertisement metrics data. The advertisement charging unit 143 is adapted to charge according to the advertisement metrics data calculated by the metrics data calculating unit 142, and the charging may be charging an advertiser corresponding to the terminal, or giving a terminal user a discount according to the fed back advertisement metrics data.

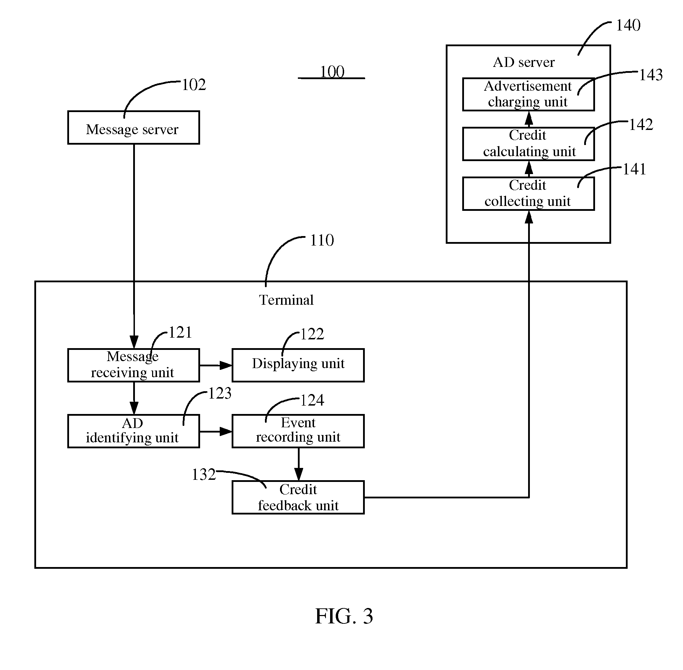

Referring to FIG. 3, the terminal 110 may not include the AD client 130. The metrics data feedback unit 132 may be disposed in the message client 120, connected to the event recording unit 124. The metrics data feedback unit 132 feeds back the "impression" and "click" event to the AD server 140 in real-time directly according to the domain name address of the AD server 140 and the port number of the AD server 140 in the AD metadata, which is not repeated herein.

In the embodiment of the present invention, the AD identifying unit 123identifies the advertisement in the message, the event recording unit 124 records the advertisement metrics event in the advertisement in real time, and the metrics data feedback unit 132 feeds back the advertisement metrics data in real time, so that real-time reporting of the advertisement metrics data to the advertisement server is realized, thus reducing the advertisement metrics data measurement error due to time difference. Also, being unable to collect the advertisement metrics data due to terminal user shutting down is avoided, the advertisement metrics data can be collected in real-time, thus avoiding being unable to measure the data in time due to user being away from the location where the advertisement is delivered. The metrics data feedback unit 132 reports the advertisement metrics data to the advertisement server, so as to prevent from wasting the system resources as the advertisement server polls all the local terminals to collect the metrics data, thereby ensuring the real-time and accurate collecting of the message advertisement metrics data.

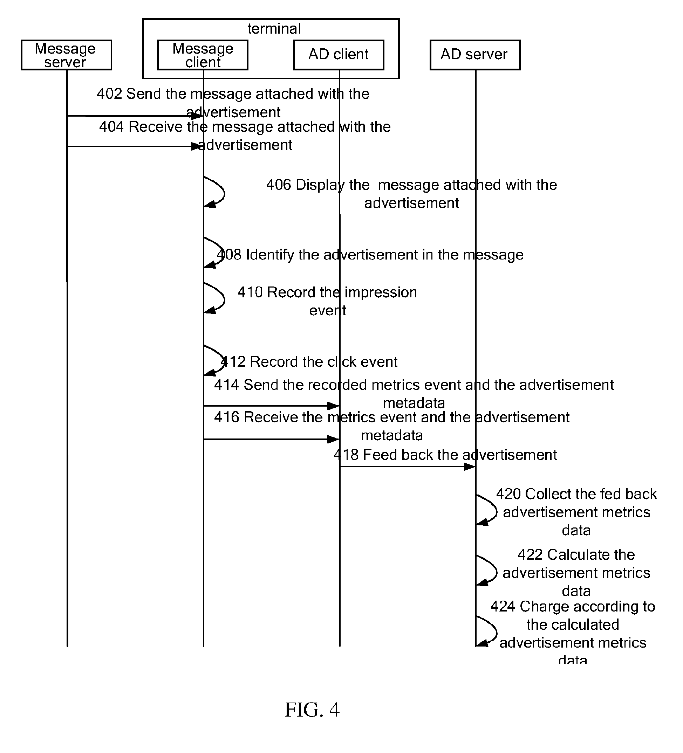

FIG. 4 shows a method for collecting message advertisement metrics data according to a third embodiment of the present invention, which includes the following steps.

In step 402, the message server sends the message attached with an advertisement to the terminal. The message includes one or more of instant message (IM), converge IP message (CPM), short message (SM), multimedia message service (MMS), E-mail, wireless application protocol push message (WAP PUSH). The message includes the advertisement metadata of the advertisement, including AD identifier, AD number, domain name address of AD server and port number of AD server, or URL (uniform resource locator) of the advertisement server, etc.

In step 404, the terminal receives the message attached with the advertisement sent by the message server.

In step 406, the message attached with the advertisement sent by the message server is displayed. In this step, if the message attached with the advertisement is an audio message, this step may be playing the audio message.

In step 408, the message client in the terminal identifies the advertisement in the message. In this embodiment, the advertisement may be identified according to the AD identifier.

In step 410, the message client records the impression metrics event of the advertisement in real time. In this embodiment, the impression metrics event is an event that the user opens the advertisement.

In step 412, the message client records the click metrics event of the advertisement in real time. In this embodiment, the click event is an event that the user clicks the advertisement to open the link of the advertisement.

In step 414, the message client sends the recorded metrics event and the advertisement metadata to the AD client of the terminal.

In step 416, the AD client receives the metrics event and the advertisement metadata sent by the message client.

In step 418, the AD client feeds back the advertisement metrics data to the advertisement server in real time according to the advertisement metadata.

In step 420, the AD server collects the fed back advertisement metrics data in real time.

In step 422, the AD server calculates the collected advertisement metrics data in real time.

In step 424, the AD server charges according to the real-time fed back advertisement metrics data. The charging may be charging an advertiser corresponding to the terminal, or giving a terminal user a discount according to the fed back advertisement metrics data.

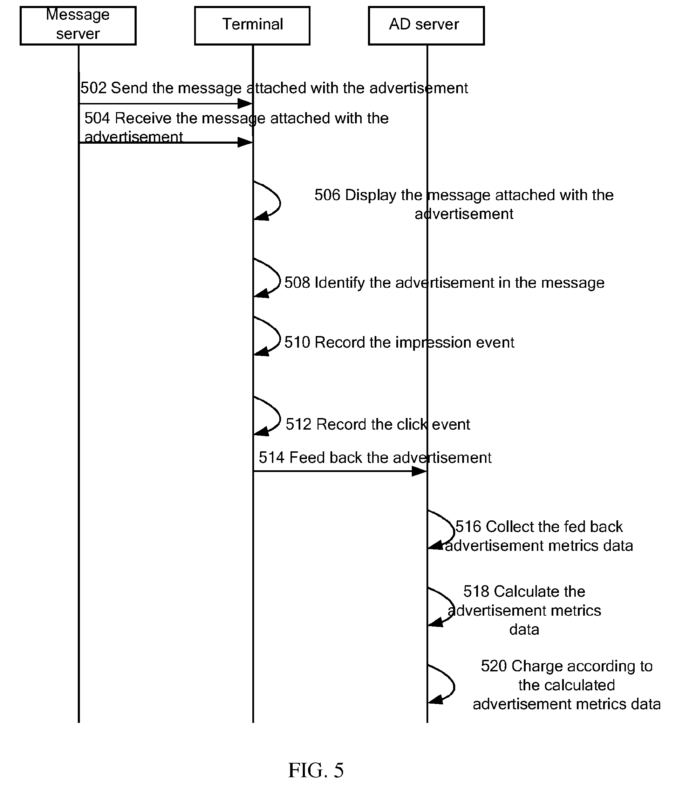

Referring to FIG. 5, a method for collecting a message advertisement metrics data according to a fourth embodiment of the present invention includes the following steps.

In step 502, the message server sends the message attached with an advertisement to the terminal.

In step 504, the terminal receives the message attached with the advertisement sent by the message server.

In step 506, the message attached with the advertisement sent by the message server is displayed. In this step, if the message attached with the advertisement is an audio message, this step may be playing the audio message.

In step 508, the message client in the terminal identifies the advertisement in the message.

In step 510, the message client records the impression metrics event of the advertisement in real time.

In step 512, the message client records the click metrics event of the advertisement in real time.

In step 514, the AD client feeds back the advertisement metrics data to the advertisement server in real time according to the advertisement metadata.

In step 516, the AD server collects the fed back advertisement metrics data in real time.

In step 518, the AD server calculates the advertisement metrics data in real time.

In step 520, the AD server charges according to the advertisement metrics data fed back by calculation, the charging may be charging the advertiser corresponding to the terminal, or giving a terminal user a discount according to the fed back advertisement metrics data.

Illustration is made below with reference to an embodiment.

The Multimedia Internet Mail Extension Type (MIME) structure can be used to carry the message attached with the advertisement of SMS/MMS/IM/CPM/Email; the AD metadata is extended in the message header of MIME, and the advertisement type is added in the content-disposition field of header standard as identifier of the AD. The Content-AD-ID, the Content-AD-Server-Address, and the Content-AD-Server-Port fields are added in the header accordingly to identify the AD number, the domain name of the AD server and the port number of the AD server respectively.

The example of the message structure is shown as below:
From: First Person <firstperson@huawei.com>
To: anyone <anyone@huawei.com>
Date: Fri, 2 Mar 2007 22:10:11 -0800 (PST)
Subject: Sample message
MIME-Version: 1.0
Content-type: multipart/mixed; boundary="simple boundary"
--simple boundary
Content-type: text/plain; charset=us-ascii
Hello world!
--simple boundary
Content-Type: image/jpeg
Content-Transfer-Encoding: binary
Content-Disposition: Advertisement
Content-AD-ID: the AD number
Content-AD-Server-Address: the domain name of advertisement server
Content-AD-Server-Port: the port number of advertisement server
THIS IS Advertisement BODY!
--simple boundary--

In the embodiment of the present invention, the AD identifying unit identifies the advertisement in the message, the event recording unit records the advertisement metrics event in the advertisement in real time, and the metrics data feedback unit feeds back the advertisement metrics data in real time, so that real-time reporting of the advertisement metrics data to the advertisement server is realized, thus reducing the advertisement metrics data measurement error due to time difference. Also, being unable to collect the advertisement metrics data due to terminal user shutting down is avoided, the advertisement metrics data can be collected in real-time, thus avoiding being unable to measure the data in time due to user being away from the location where the advertisement is delivered. The metrics data feedback unit reports the advertisement metrics data to the advertisement server, so as to prevent from wasting the system resources as the advertisement server polls all the local terminals to collect the metrics data, thereby ensuring the real-time and accurate collecting of the message advertisement metrics data.

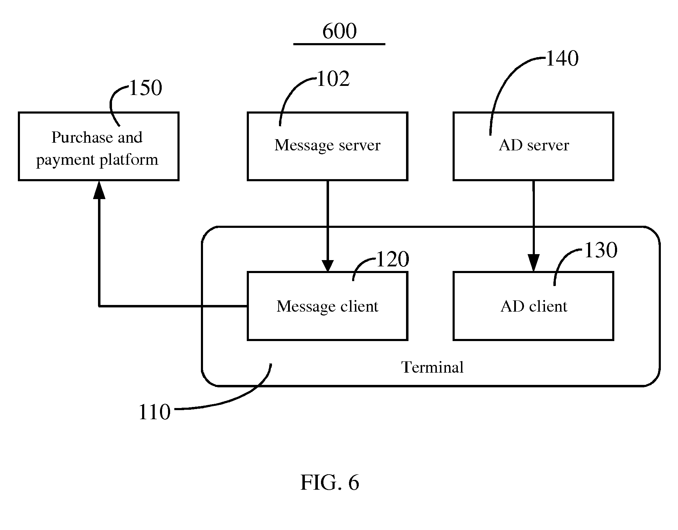

Referring to FIG. 6, a system for collecting a message recommendation advertisement metrics data 600 according to a preferred embodiment of the present invention includes: a message server 102, an AD server 140, a purchase and payment platform 150, and a terminal 110.

The message server 102 is adapted to send the message attached with a recommendation advertisement to the terminal 110, and the message may be MMS, IM, CPM, E-mail, WAP PUSH message, etc. The advertisement metadata of the advertisement included in the message includes: the recommender identifier, the AD identifier, the AD number, the domain name address of the AD server and the port number of the AD server, or the URL of the advertisement server, etc.

The AD server 140 is adapted to collect the advertisement metrics data of the recommendation advertisement fed back by the terminal 110, and to measure and perform statistics on the recommendation effect of the recommendation advertisement according to the recommender identifier and the advertisement metrics data. The advertisement server 110 is further adapted to measure and perform statistics on the recommendation of effect of the recommendation advertisement according to the purchase event and the recommender identifier information fed back by the purchase and payment platform 150. The collected metrics data include one or more of the receiving, impression and click events.

The purchase and payment platform 150 is adapted to complete the purchase transaction processing of the terminal 110, record the purchase event, and feed back the purchase event to the advertisement server 140 according to the purchase event of the terminal 110.

The terminal 110 is adapted to receive the recommendation message attached with the advertisement, identify the recommendation advertisement in the message, record the advertisement metrics event of the recommendation advertisement, and feed back the advertisement metrics data of the recommendation advertisement to the advertisement server 140. In this embodiment, the terminal 110 includes a message client 120 and an AD client 130. The message client 120 is adapted to receive the message attached with the recommendation advertisement, identify the recommendation advertisement in the message, and record the advertisement metrics event of the recommendation advertisement. The AD client 130 is adapted to feed back the advertisement metrics data of the recommendation advertisement to the advertisement server according to the recorded advertisement metrics data of the recommendation advertisement, and the feedback includes the recommender identifier information.

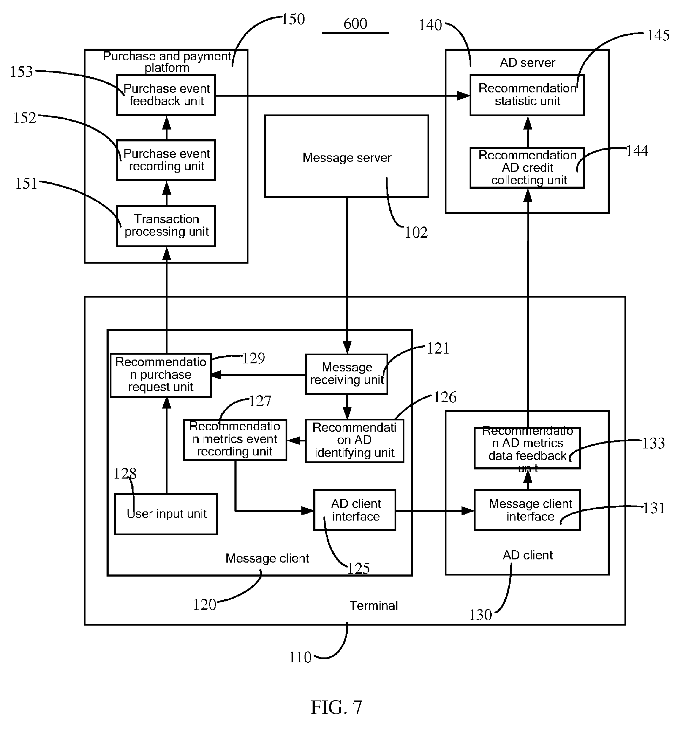

Referring to FIG.7, the message client 120 includes a message receiving unit 121, a recommendation AD identifying unit 126, a recommendation metrics event recording unit 127, an AD client interface 125, a user input unit 128, and a recommendation purchase request unit 129.

The message receiving unit 121 is adapted to receive the message attached with a recommendation advertisement sent by the message server. The message attached with the recommendation advertisement includes the recommender identifier information, and the message may be MMS, IM, CPM, E-mail, WAP PUSH message, etc. The advertisement metadata of the advertisement included in the message includes the recommender identifier, the AD identifier, the AD number, the domain name of the AD server and the port number of the AD server, or the URL of the advertisement server, etc.

The recommendation identifying unit 126 is adapted to identify the advertisement of the message attached with the recommendation advertisement.

The recommendation metrics event recording unit 127 is adapted to record the advertisement metrics event of the recommendation advertisement attached. The metrics events include one or more of the receiving, impression and click events.

The AD client interface 125 is adapted to send the recorded advertisement metrics data and advertisement metadata to the AD client 130, and interact with the AD client 130.

The user input unit 128 is adapted to receive the purchase request input by the user. In this embodiment, the user input unit 128 may be input devices such as a keyboard or a touch screen.

The recommendation purchase request unit 129 is adapted to send the purchase request event to the purchase and payment platform according to the purchase request input by the user and the recommendation advertisement.

The AD client 130 includes a message client interface 131 and a recommendation AD metrics data feedback unit 133. The message client interface 131 is adapted to record the advertisement metrics data and advertisement metadata, and interact with the message client 120. The recommendation AD metrics data feedback unit 133 is adapted to feed back the advertisement metrics data of the recommendation advertisement to the advertisement server, and the feedback may be a real-time feedback or a periodic feedback after storage.

The AD server 140 includes a recommendation AD metrics data collecting unit 144 and a recommendation statistic unit 145. The recommendation AD metrics data collecting unit 144 is adapted to collect the fed back advertisement metrics data of the recommendation advertisement. The recommendation statistic unit 145 is adapted to measure and perform statistics on the recommendation effect according to the fed back advertisement metrics data of the recommendation advertisement and the carried recommender identifier information, or measure and perform statistics on the recommendation effect according to the fed back purchase event and the recommender identifier information.

The purchase and payment platform 150 includes a transaction processing unit 151, a purchase event recording unit 152, and a purchase event feedback unit 153. The transaction processing unit 151 is adapted to complete the processing of the transaction according to the recommendation advertisement purchase request of the terminal. The purchase event recording unit 152 is adapted to record the purchase event of the recommendation advertisement and recommender identifier information, etc. The purchase event feedback unit 153 is adapted to feed back the purchase event of the recommendation advertisement to the advertisement server, and the feedback includes the recommender identifier information.

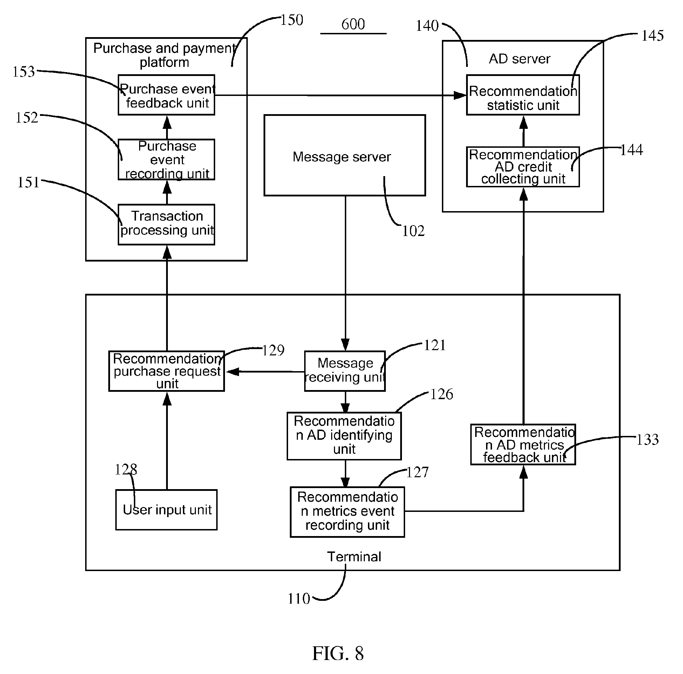

FIG. 8 shows system for collecting message advertisement metrics data according to a sixth embodiment of the present invention. Referring to FIG. 8, the terminal 110 may not include an AD client, and the recommendation advertisement metrics data feedback unit may be disposed in the message client, connected to the recommendation advertisement metrics event recording unit. The recommendation advertisement metrics data feedback unit feeds back the receive, impression and click events, etc. to the AD server directly according to the domain name address of the AD server and the port number of the AD server, the real-time or periodic carried recommender ID, which is not repeated herein.

By identifying the recommendation advertisement and reporting the recommended advertisement metrics event and recommender ID to the AD server, the above recommendation message advertisement metrics data collecting system is able to measure according to the recommendation effect, thus being beneficial to the spreading and application of the service, and facilitating the propagation of the advertisement. By way of feeding back the purchase event by the purchase and payment platform, the advertisement server is capable of measuring and performing statistics on the purchase events due to the advertisement, thus increasing the controllability of the advertisement.

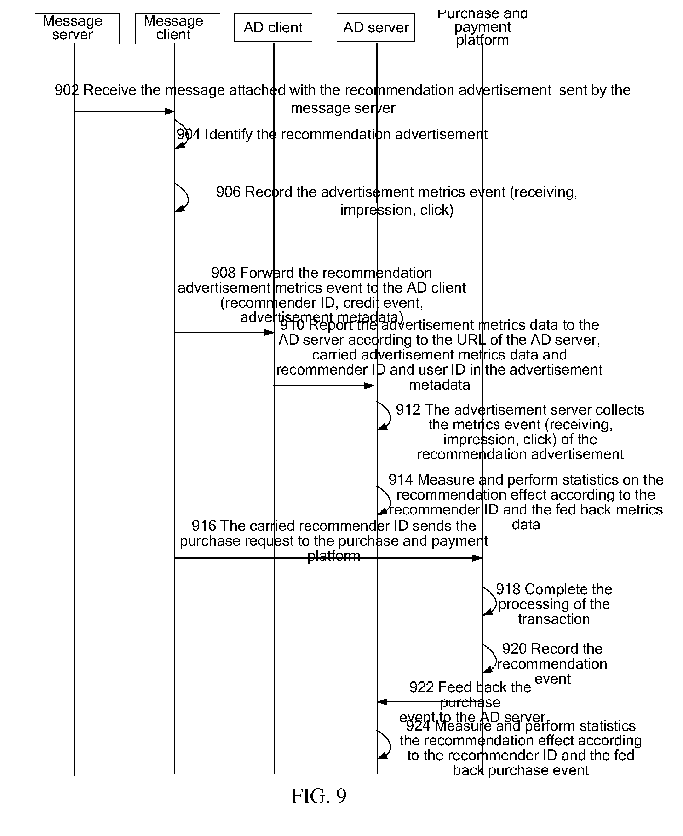

FIG. 9 is a method for collecting message advertisement metrics data according to embodiment of the present invention. Referring to FIG. 9, the method includes the following steps.

In step 902, the message attached with a recommendation advertisement sent by the message server is received. The message may be MMS, IM, CPM, E-mail, WAP PUSH message, etc. The advertisement metadata of the advertisement included in the message includes the recommender identifier, the AD identifier, the AD number, the domain name address of the AD server and the port number of the AD server, or the URL of the advertisement server, etc.

In step 904, the advertisement in the message attached with the recommendation advertisement is identified. The methods of identifying the recommendation advertisement may be the following methods. The first method is identified by the ID or telephone number of the sender. If the number of the sender is a number of ordinary user instead of the ID or number of an advertisement Service Provider (SP) (the ID or number of SP is usually special), it is determined that the advertisement is an advertisement forwarded by the recommender. If the first method cannot identify the advertisement (such as being unable to distinguish the number of the SP and the number of ordinary user), a second method or a third method can be used. The second method is carrying the ID or number of the advertisement SP in the advertisement metadata and comparing the number of the sender with the ID or number to judge whether they are the same, so as to determine whether this is a recommendation advertisement. If yes, this is not a recommendation advertisement; if no, this is a recommendation advertisement. The third method is carrying "the first hand advertisement" identifier in the metadata of the advertisement. If the advertisement is delivered by the advertisement SP at first hand, the identifier is "Yes", and then, the message client changes the identifier in the metadata into "No" after receiving the first hand advertisement. When the user forwards the advertisement, the advertisement is a non-first hand advertisement. If the "first hand advertisement" identifier of the metadata in the advertisement message received by the message client is "No", the advertisement is determined to be a recommendation advertisement.

In step 906, the advertisement metrics event of the attached recommendation advertisement is recorded. The metrics event includes one or more of the receive, impression and click events.

In step 908, the recommendation advertisement metrics event is forwarded to the AD client, including the recommender ID, the metrics event, and the advertisement metadata, etc.

In step 910, the advertisement metrics data of the recommendation advertisement is fed back to the advertisement server. The feedback may be a real-time feedback, or a periodic feedback after storage. In this embodiment, the advertisement metrics data of the recommendation advertisement is reported to the AD server according to the AD server URL, carried advertisement metrics data, recommender ID, and the user ID.

In step 912, the fed back advertisement metrics data of the recommendation advertisement is collected. In this embodiment, the advertisement server collects the recommendation advertisement receive, impression, click events, etc.

In step 914, the recommendation effect is measured and statistics is performed according to the fed back advertisement metrics data of the recommendation advertisement and the carried recommender identifier information.

In step 916, the message client sends the purchase request to the purchase and payment platform, and the request includes the recommender ID and the user ID.

In step 918, the processing of the transaction is completed according to the recommendation advertisement of the terminal.

In step 920, the purchase event and the recommmender ID of the recommendation advertisement are recorded.

In step 922, the purchase and payment platform feeds back the purchase event to the AD server. The feedback may be a real-time feedback or a periodic feedback after storage.

In step 924, the recommendation effect is measured and statistics is performed according to the fed back purchase event and the recommender identifier information.

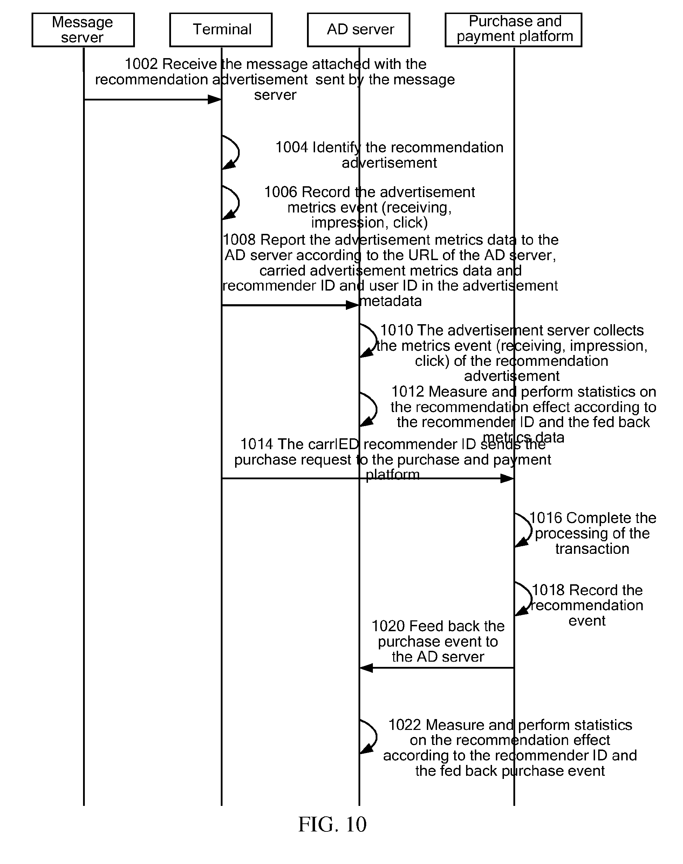

FIG. 10 is a recommendation message advertisement metrics data collecting method according to the embodiment of the present invention. Referring to FIG. 10, the method includes the following steps.

In step 1002, the message attached with a recommendation advertisement sent by the message server is received. The message may be MMS, IM, CPM, E-mail, WAP PUSH message, etc. The advertisement metadata of the advertisement included in the message includes: the recommender identifier, the AD identifier, the AD number, the domain name address of the AD server and the port number of the AD server, or the URL of the advertisement server, etc.

In step 1004, the advertisement in the message attached with the recommendation advertisement is identified.

In step 1006, the advertisement metrics event of the attached recommendation advertisement is recorded. The metrics event may be one or more of the receiving, impression and click events.

In step 1008, the advertisement metrics data of the recommendation advertisement is fed back to the advertisement server. The feedback may be a real-time or a periodic feedback after storage. In this embodiment, the advertisement metrics data of the recommendation advertisement is reported to the AD server according to the AD server URL, carried advertisement metrics data, an recommender ID, and the user ID. The feeding the recorded advertisement metrics data back to the advertisement server includes feeding back when the advertisement server is polling the terminal, or actively feeding back, by the terminal, to the advertisement server.

In step 1010, the fed back advertisement metrics data of the recommendation advertisement is collected. In this embodiment, the advertisement server collects the recommendation advertisement receiving, impression, click events, etc.

In step 1012, the recommendation effect is measured and statistics is performed according to the fed back advertisement metrics data of the recommendation advertisement and the carried recommender identifier information.

In step 1014, the message client sends the purchase request to the purchase and payment platform, and the request includes the recommender ID and the user ID.

In step 1016, the processing of the transaction is completed according to the recommendation advertisement purchase request of the terminal.

In step 1018, the purchase event of the recommendation advertisement and the recommender ID are recorded.

In step 1020, the purchase and payment platform feeds the purchase event back to the AD server. The feedback may be a real-time feedback or a periodic feedback after storage.

In step 1022, the recommendation effect is measured and statistics is performed according to the fed back purchase event and recommender identifier information.

By identifying the recommendation advertisement and reporting the recommended advertisement metrics event and recommender ID to the AD server, the above recommendation message advertisement metrics data collecting method may measure according to the recommendation effect, thus being beneficial to the spreading and application of the service, and facilitating the spreading of the advertisement. By way of feeding back the purchase event by purchase and payment platform, the advertisement server is capable of measuring and performing statistics on the purchase events due to the advertisement, thus increasing the controllability of the advertisement.

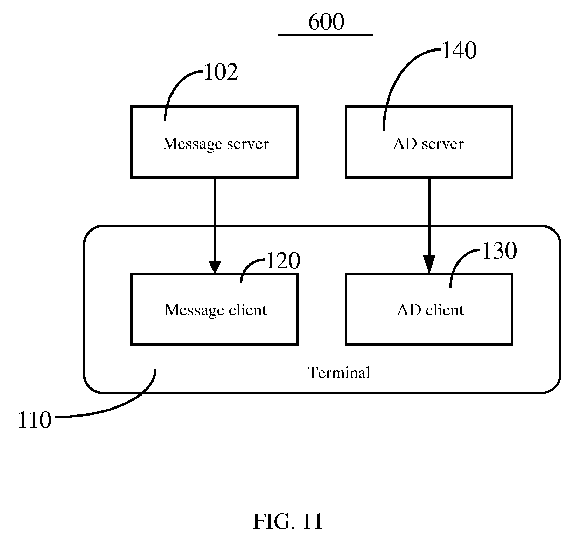

Referring to FIG. 11, a system for collecting a message advertisement metrics data 600 according to the embodiment of the present invention includes a message server 102, an AD server 140 and a terminal 110.

The message server 102 is adapted to send the message attached with a recommendation advertisement to the server 110. The message may be MMS, IM, CPM, E-mail, WAP PUSH message, etc. The advertisement metadata of the advertisement included in the message includes: the recommender identifier, the AD identifier, the AD number, the domain name address of the AD server and the port number of the AD server, or the URL of the advertisement server, etc.

The AD server 140 is adapted to collect the advertisement metrics data of the recommendation advertisement fed back by the terminal 110, measure and perform statistics on the recommendation effect of the recommendation advertisement according to the recommender identifier information and the advertisement metrics data. The collected metrics data includes one or more of the receiving, impression and click events, etc.

The terminal 110 is adapted to receive the message attached with the recommendation advertisement, identify the recommendation advertisement in the message, record the advertisement metrics event of the recommendation advertisement, and feed back the advertisement metrics data of the recommendation advertisement to the advertisement server 140. In this embodiment, the terminal 110 includes a message client 120 and an AD client 130. The message client 120 is adapted to receive the message attached with the recommendation advertisement, identify the recommendation advertisement in the message, and record the advertisement metrics event of the recommendation advertisement. The AD client 130 is adapted to feed back the advertisement metrics data of the recommendation advertisement to the advertisement server according to the recorded advertisement metrics data of the recommendation advertisement, and the feedback includes the recommender identifier information.

By identifying the recommendation advertisement and reporting the recommended advertisement metrics event and recommender ID to the AD server, the above recommendation message advertisement metrics data collecting system may measure according to the recommendation effect, thus being beneficial to the spreading and application of the service, and facilitating the spreading of the advertisement.

It will be apparent to those skilled in the art that various modifications and variations can be made to the structure of the present invention without departing from the scope of the present invention. Therefore, the content of the specification of the present invention shall not be considered as restricting the present invention.

## Claims

1. A method for collecting message advertisement metrics data, comprising:
receiving a message attached with an advertisement sent by a message server;
identifying the advertisement in the message, and recording an advertisement metrics event of the advertisement in real time; and
feeding back the advertisement metrics data to the advertisement server in real time.

2. The method for collecting message advertisement metrics data according to claim 1, further comprising: displaying the message attached with the advertisement sent by the message server.

3. The method for collecting message advertisement metrics data according to claim 1, wherein the advertisement metrics event is an impression event and/or a click event.

4. The method for collecting message advertisement metrics data according to claim 1, wherein the message comprises one or more of an instant message (IM), a converge IP message (CPM), a short message (SM), a multimedia message serial (MMS), an E-mail, and a wireless application protocol push message (WAP PUSH).

5. The method for collecting message advertisement metrics data according to claim 1 or 4, wherein the message comprises at least one of the following advertisement metadata: an advertisement identifier, an advertisement number, a domain name address of the advertisement server and a port number of the advertisement server, and a uniform resource locator (URL) of the advertisement server.

6. A method for collecting message advertisement metrics data, comprising:
receiving, by a terminal, a message attached with an advertisement, identifying the advertisement in the message, recording an advertisement metrics event of the advertisement in real time, and feeding back the advertisement metrics data to an advertisement server in real time; and
collecting, by the advertisement server, the real-time fed back advertisement metrics data at a network side.

7. The method for collecting message advertisement metrics data according to claim 6, further comprising: charging by calculating the real-time fed back advertisement metrics data.

8. The method for collecting message advertisement metrics data according to claim 7, wherein the charging comprises charging an advertiser corresponding to a user according to the fed back advertisement metrics data and/or giving a terminal user a discount according to the fed back advertisement metrics data.

9. A method for collecting message advertisement metrics data, comprising:
receiving a real-time fed back advertisement metrics data sent by a terminal; and
collecting the advertisement metrics data in real time.

10. The method for collecting message advertisement metrics data according to claim 9, further comprising charging an advertiser corresponding to the terminal and/or the terminal according to the advertisement metrics data.

11. A method for collecting message advertisement metrics data, comprising:
receiving a message attached with an advertisement sent by a message server;
identifying whether the advertisement in the message is a recommendation advertisement, and recording an advertisement metrics event of the attached recommendation advertisement; and
feeding back the recorded advertisement metrics data to an advertisement server, and carrying identifier information of a recommender.

12. The method for collecting message advertisement metrics data according to claim 11, wherein the identifier information of the recommender comprises message sender identifier information.

13. The method for collecting message advertisement metrics data according to claim 11, wherein when the advertisement in the message attached with an advertisement is a recommendation advertisement, the advertisement metrics data is associated with the message recommender identifier.

14. The method for collecting message advertisement metrics data according to claim 11, wherein feeding back the recorded advertisement metrics data to the advertisement server comprises feeding back when the advertisement server is polling the terminal, or feeding back, by the terminal, to the advertisement server actively.

15. The method for collecting message advertisement metrics data according to claim 11, wherein the advertisement metrics event comprises one or a combination of a receiving event, an impression event, and a click event.

16. The method for collecting message advertisement metrics data according to claim 11, wherein the message attached with a recommendation advertisement comprises one or more of an instant message (IM), a converge IP message (CPM), a short message (SM), a multimedia message serial (MMS), an E-mail, and a wireless application protocol push message (WAP PUSH).

17. The method for collecting message advertisement metrics data according to claim 11, wherein the message attached with a recommendation advertisement comprises at least one of the following advertisement metadata: an advertisement identifier, an advertisement number, a domain name address of the advertisement server and a port number of the advertisement server, and a uniform resource locator (URL) of the advertisement server.

18. The method for collecting message advertisement metrics data according to claim 11, further comprising: measuring and performing statistics on the recommendation effect according the fed back recorded advertisement metrics data of the recommendation advertisement and the carried recommender identifier information.

19. The method for collecting message advertisement metrics data according to claim 11, further comprising: sending a purchase request containing the recommender identifier information to a purchase and payment platform, and measuring and performing statistics on the recommendation effect according to the fed back purchase event and the recommender identifier information.

20. The method for collecting message advertisement metrics data according to claim 11, wherein feeding back the recorded advertisement metrics data of the advertisement to the advertisement server is a real-time feedback or a periodic feedback after storage.

21. The method for collecting message advertisement metrics data according to claim 11, wherein identifying whether the advertisement in the message is a recommendation advertisement comprises identifying whether a user identifier of the sender is an ordinary identifier instead of an identifier of a service provider, so as to judge whether the advertisement is an advertisement sent by a recommender.

22. The method for collecting message advertisement metrics data according to claim 11, wherein identifying whether the advertisement in the message is a recommendation advertisement comprises comparing the advertisement service provider identifier in the advertisement metadata with the identifier of the sender to judge whether they are the same.

23. The method for collecting message advertisement metrics data according to claim 11, wherein identifying whether the advertisement in the message is a recommendation advertisement comprises identifying a first hand advertisement identifier carried by the metadata of the advertisement to judge whether the advertisement in the message is a recommendation advertisement.

24. A method for collecting message advertisement metrics data, comprising:
receiving an advertisement metrics data of a recommendation advertisement fed back by a terminal; and
collecting the fed back advertisement metrics data of the recommendation advertisement.

25. The method for collecting message advertisement metrics data according to claim 24, further comprising measuring and performing statistics on the recommendation effect according to the fed back advertisement metrics data of the recommendation and carried recommender identifier information.

26. The method for collecting message advertisement metrics data according to claim 24, further comprising: measuring and performing statistics on the recommendation effect according to the fed back purchase event and the recommender identifier information.

27. A system for collecting message advertisement metrics data, comprising:
a terminal, adapted to receive a message attached with an advertisement, identify the advertisement in the message, record an advertisement metrics event of the advertisement in real time, and feed back the advertisement metrics data in real time; and
an advertisement server, adapted to collect the advertisement metrics data.

28. A terminal, comprising:
a message receiving unit, adapted to receive a message attached with an advertisement sent by a message server;
an advertisement identifying unit, adapted to identify the advertisement of the message;
an event recording unit, adapted to record an advertisement metrics event of the advertisement in real time; and
a metrics data feedback unit, adapted to feed back the advertisement metrics data in real-time.

29. The terminal according to claim 28, further comprising:
a displaying unit, adapted to display the message attached with an advertisement.

30. The terminal according to claim 28, comprising a message client and an advertisement client, wherein the message receiving unit, the advertisement identifying unit, and the event recording unit are disposed at the message client, and the metrics data feedback unit is disposed at the advertisement client.

31. The terminal according to claim 30, wherein the message client further comprises an advertisement client interface, the advertisement client comprises a message client interface, and the advertisement client interface interacts with the message client interface.

32. A terminal, comprising:
a message client, adapted to receive a message attached with an advertisement sent by a message server, identify the advertisement in the message, and record an advertisement metrics event of the advertisement in real time; and
an advertisement client, adapted to feed back the advertisement metrics data in real time according to the real-time recorded advertisement metrics event of the advertisement.

33. An advertisement server, comprising:
a metrics data collecting unit, adapted to collect a fed back advertisement metrics data in real time, and
a metrics data calculating unit, adapted to calculate the collected fed back advertisement metrics data.

34. The advertisement server according to claim 33, further comprising an advertisement charging unit, adapted to charge according to the advertisement metrics data calculated by the metrics data calculating unit.

35. A system for collecting message advertisement metrics data, comprising:
a message server, adapted to send message attached with a recommendation advertisement to a terminal;
a terminal, adapted to receive the message attached with a recommendation advertisement, identify the recommendation advertisement in the message, record an advertisement metrics event of the recommendation advertisement, and feed back the advertisement metrics data of the recommendation advertisement to an advertisement server; and
an advertisement server, adapted to collect the advertisement metrics data of the recommendation advertisement fed back by the terminal.

36. The system for collecting message advertisement metrics data according to claim 35, further comprising: a purchase and payment platform, adapted to feed back a purchase event to the advertisement server according to the purchase event of the terminal; wherein the advertisement server measures and performs statistics on the recommendation effect of the advertisement according to the purchase event and a recommender identifier.

37. A terminal, comprising:
a message receiving unit, adapted to receive a message attached with a recommendation advertisement;
a recommendation advertisement identifying unit, adapted to identify the recommendation advertisement in the message;
a recommendation metrics event recording unit, adapted to record an advertisement metrics event of the recommendation advertisement; and
a recommendation advertisement metrics data feedback unit, adapted to feed back the advertisement metrics data of the recommendation advertisement to an advertisement server.

38. The terminal according to claim 37, further comprising:
a user input unit, adapted to receive a purchase request input by a user; and
a recommendation purchase request unit, adapted to send a purchase request event to a purchase and payment platform according to the purchase request input by the user and the recommendation advertisement.

39. A terminal, comprising:
a message client, adapted to receive a message attached with a recommendation advertisement, identify the recommendation advertisement in the message, and record an advertisement metrics event of the recommendation advertisement; and
an advertisement client, adapted to feed back the advertisement metrics data of the recommendation advertisement to an advertisement server according to the recorded advertisement metrics data of the recommendation advertisement.

40. An advertisement server, comprising:
a recommendation advertisement metrics data collecting unit, adapted to collect an advertisement metrics data of a recommendation advertisement fed back by a terminal; and
a recommendation statistic unit, adapted to measure the recommendation effect of the recommendation advertisement according to the fed back advertisement metrics data of the recommendation advertisement.

41. The advertisement server according to claim 40, wherein the recommendation statistic unit further measures the recommendation effect of the recommendation advertisement according to a purchase event fed back by a purchase and payment platform.

42. A purchase and payment platform, comprising:
a transaction processing unit, adapted to complete the processing of a transaction according to a recommendation advertisement purchase request; and
a purchase event feedback unit, adapted to feed back the recommendation advertisement purchase event to an advertisement server.

43. The purchase and payment platform according to claim 42, further comprising: a purchase event recording unit, adapted to record the purchase event of the recommendation advertisement.
